(19)

Europäisches
Patentamt
European
Patent Office
Office européen
des brevets

(11) **EP 3 845 068 A1**

(12) **EUROPEAN PATENT APPLICATION**
published in accordance with Art. 153(4) EPC

(43) Date of publication:
**07.07.2021 Bulletin 2021/27**

(21) Application number: **18932137.5**

(22) Date of filing: **14.11.2018**

(51) Int Cl.:
**A01N 65/00** (2009.01)        **A01N 65/03** (2009.01)
**A01N 65/12** (2009.01)        **C05D 9/00** (2006.01)

(86) International application number:
**PCT/BR2018/050425**

(87) International publication number:
**WO 2020/041846 (05.03.2020 Gazette 2020/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **31.08.2018 BR 102018067297**

(71) Applicant: **Agrivalle Brasil Industria e Comércio de Produtos**
**Agrícolas Ltda**
**13320-000 Salto / SP (BR)**

(72) Inventors:
• **BERNARDO, Eduardo Roberto de Almeida**
**13331-284 INDAIATUBA / SP (BR)**
• **ZUCCHI, Tiago Domingues**
**13331-100 INDAIATUBA SP (BR)**
• **MARTINS, Thales Facanali**
**13333-515 INDAIATUBA / SP (BR)**
• **GALVÃO, Vanessa Benaci**
**13341-640 INDAIATUBA / SP (BR)**
• **VIEIRA, Bernardo Albuquerque Regina de Matto**
**13020-081 CAMPINAS / SP (BR)**

(74) Representative: **Pereira Garcia, João Luís**
**Simões, Garcia, Corte-Real e Associados**
**Rua Castilho, 167, 2°**
**1070-050 Lisboa (PT)**

(54) **COMPOSITION OF MICRONUTRIENTS AND ORGANIC COMPOUNDS FOR TREATING, COATING AND ENCRUSTING SEEDS**

(57) The present invention relates to compositions of micronutrients and organic compounds to be used in the treatment, coating and encrustation of seeds of cultivated plants, such as: *Brachiaria spp. (Brachiaria brizantha, Brachiaria decumbens, Brachiaria humidicola, Brachiaria mutica, Brachiaria ruziziensis, Brachiaria arrecta, Brachiaria dictyneura), Panicum spp. (Panicum maximum), Sorghum spp., Pennisetum americanum, Glycine max, Zea mays, Gossypium hirsutum,* greenery *(Solanum lycopersicum, Allium cepa, Lactuca sativa, Daucus carota, Capsicum annuum),* forestry *(Eucalyptus spp., Tectona grandis, Hevea brasiliensis, Pinus sp.), Nicotiana tabacum,* ornamental *Crotalaria spp. (Crotalaria juncea, Crotalaria spectabilis, Crotalaria ochroleuca, Crotalaria paulina, Crotalaria breviflora).* Pertaining to the technical field of agricultural technology, these compositions are associated with the assistance and stimulation of the process of biological nitrogen fixation in the crop cycle, and advantageous in the event of abiotic stresses, mainly in the establishment and germination of the crop and stimulation of the plant growth provided by the components thereof. Particularly, the formulations are combinations of cobalt, molybdenum, nickel, amino acids, plant extracts and algae extracts, within the variations and proportions thereof, together with additives and excipients for improving the formulation of the product.

**EP 3 845 068 A1**

**Description**

FIELD OF APPLICATION

The present patent application refers to compositions of micronutrients and organic compounds to be used in the treatment, coating and encrustation of seeds of cultivated plants, more particularly compositions based on cobalt and molybdenum combined with amino acids, seaweed extracts and organic substances. Pertaining to the technical field of agricultural technology, these compositions are associated with the assistance and stimulation of the process of biological nitrogen fixation in the crop cycle, and advantageous in the event of abiotic stresses, mainly in the establishment and germination of the crop and stimulation of the plant growth provided by the components thereof. Particularly, the formulations are combinations of cobalt, molybdenum, nickel, amino acids, plant extracts and algae extracts, within the variations and proportions thereof, together with additives and excipients for improving the formulation of the product.

STATE OF THE ART

In the current productive scenario, the increase in the productivity of crops is mainly due to the implantation of technological packages that benefit the crops. Amongst these technologies, the use of micronutrients, such as cobalt and molybdenum, can provide increments of up to 32.7% in the productivity of soy plants (Vitti et al. 1984).Similar results had been demonstrated by Hungria et al.(2007), where the treatment of seeds with molybdenum and cobalt has increased the productivity of soy by 20%. Either cobalt or molybdenum play a crucial role in the nutrition of plants, acting in basic metabolic routes to improve the development thereof. Further, they act synergically in the biological nitrogen fixation: molybdenum assists in the action of nitrogenase while cobalt, by means of cobalamine, prevents the inhibition of nitrogenase, thus regulating the concentration of oxygen in nodules (Ceretta et al., 2005; Araújo et al., 2008).
The required amounts of molybdenum and cobalt in small plants are small and the application thereof through the seed is one of the most practical and efficient forms of fertilization. In the marketplace there are commercial products that contain such micronutrients in variable concentrations, almost always in a 10:1 ratio (Mo:Co).
Besides the use of such micronutrients, the use of biostimulators to provide larger increments for the crop is ever growing through the years. Biostimulators are complex organic composites that promote the hormonal balance of plants, favoring the expression of the genetic potential thereof, stimulating the development of the root system (ONO et al., 1999). Said compounds act by degrading spare substances of the seeds in the cell differentiation, division and extension (CASTRO, 2001; VIEIRA, 2001). The phytohormones contained in biostimulators are signaling molecules, naturally present in the plants in basically small concentrations, being responsible for notable effects on the vegetal development (TAIZ & ZEIGER, 2004).
In accordance with Vieira (2001), biostimulators can be defined by the mixture of two or mor plant regulators or the mixture of plant regulators with amino acids, vitamins and/or nutrients. Further, natural products, obtained from the extract of seaweed Ascophyllum nodosum, have also been used as biostimulators in several crops (BROWN, 2004 apud SBERSE, 2013).
Another natural source used as biostimulators includes amino acids (BRANDÃO, 2007; CAÇO, 2008), which are used to fulfill a large part of structural needs, assist in the synthesis of vitamins and several compounds such as enzymes, hormones and chlorophyl. They act in the storage and transport of nitrogen, thus acting directly in order to attain a bigger plant development together with a reduced energy waste, providing a reduction in the phytotoxicity of some agrochemicals, besides promoting a higher tolerance to hydric stress and frosts, higher blooming and increased productivity. The result of such benefits is an improved germination, production of plants with more developed roots, more vigorous plants, a more uniform filling of grains and higher productivity in the cultivation of soy. Ludwig et al. (2008). Thus, the introduction of biostimulators in the treatment, covering and encrustation of seeds, either isolated or in combination with other products have become a trend in the sector, provided it does not affect the quality of the seed.
The physiological quality of the seeds has been characterized by the germination and vigor, wherein the vigor of the seeds is the sum of attributes that provide the seed with a potential to germinate, emerge and quickly turn into normal plantules under a wide diversity of ambient conditions
(HOFS et al., 2004). Works show that the use of biostimulators for the treatment of mildew seeds in general, do not jeopardize the germination and vigor of same, and they can also provide an increase in the root in relation to non-treated seeds (Weber, 2011; Ono et al., 1999; Silva et al. 2008). Notwithstanding, some regulators contain micronutrient in their formulations, and these are inserted to minimize problems caused by eventual deficiencies, during the processes of germination, development and production of seeds.
Thus, the object of the present patent meets the need to develop effective formulations that associate biostimulators to the use of micronutrients such as cobalt, molybdenum and nickel in the cultivation of soy. These formulations involve the associated use of different sources of biostimulators with different associations of micronutrients. Additionally, the invention refers to the effective use of seaweed extracts, amino acids, S. *rebaudiana* extract, cobalt, molybdenum, and nickel concomitantly with additives and excipients, in liquid formulations with properties for the use in the treatment, covering and encrustation of seeds of cultivated plants.

OBJECTS OF THE INVENTION

Thus, the object of the present invention is to apply compositions of micronutrients and organic compounds to be used in the treatment, covering and encrustation of seeds of cultivated plants including, but not limited to, *Brachiaria spp. (Brachiaria brizantha, Brachiaria decumbens, humidicola Brachiaria, mutica Brachiaria, Brachiaria ruziziensis, Brachiaria arrecta, Brachiaria dictyneura), Panicum spp. (Panicum maximum), Sorghum spp., Pennisetum americanum, Glycine max, Zea mays, Gossypium hirsutum,* greenery *(Solanum lycopersicum, Allium cepa, sativa Lactuca, Daucus carota, Capsicum annuum),* forestry *(Eucalyptus spp., Tectona grandis, Hevea brasiliensis, Pinus sp.),* Nicotiana tabacum, ornamental *Crotalaria spp. (Crotalaria juncea, Crotalaria spectabilis, Crotalaria ochroleuca, Crotalaria paulina, Crotalaria brevifora).* Pertaining to the technical field of agricultural technology, these compositions are associated with the assistance and stimulation of the process of biological nitrogen fixation in the crop cycle, and advantageous in the event of abiotic stresses, mainly in the establishment and germination of the crop and stimulation of the plant growth provided by the components thereof. Particularly, the formulations are combinations of cobalt, molybdenum, nickel, amino acids, plant extracts and algae extracts, within the variations and proportions thereof, together with additives and excipients for improving the formulation of the product.

BRIEF DESCRIPTION OF THE INVENTION

The present invention refers to the effective use of compositions of micronutrients and organic compounds, concomitantly with additives and excipients, to be used or not in the treatment, covering and industrial encrustation of seeds of cultivated plants.

DETAILED DESCRIPTION OF THE INVENTION

The compositions of the formulations exhibit, but without limitation, a final concentration of (percentage, g.Kg$^{-1}$; Table 1):

**Table 1.** Concentrations for the preparation of the probiotic composition

| Nutrients | Concentration | | |
|---|---|---|---|
| | Formula 1 | Formula 2 | Formula 3 |
| Molybdenum | 0.1 - 20.0% | 0.1 - 20.0% | 0.1 - 20.0% |
| Cobalt | 0.1 - 5.0% | 0.1 - 5.0% | 0.1 - 5.0% |
| Nickel | -- | -- | 0.1 - 5.0% |
| Amino acid | 0.1 - 20.0% | -- | -- |
| Brown seeweed extract[1] | 0.1 - 20.0% | 0.1 - 20.0% | 0.1 - 20.0% |
| S. *rebaudiana* extract | -- | 0.1 - 5.0% | 0.1 - 5.0% |
| Additive | 0.1 - 10.0% | 0.1 - 10.0% | 0.1 - 10.0% |
| Excipient (q.s.p.) | 100% | 100% | 100% |

[1]The brown seaweed extract can be, but not limited to, *Ascophyllum nodosum, Macrocystis pyrifera, Ecklonia maxima, Durvilalea antarctica, Durvillaea potatorum,* and combinations thereof.

The additives are dispersants chosen from the group consisting of water-soluble ionic polymers, water-soluble anionic polymers, surfactants selected from the group consisting of anionic surfactants and non-ionic surfactants, and combinations thereof.

The excipients belong to the group consisting of silicas, talc, bentonite, carbohydrates, carbonates, starches, sugars, saccharides, and combinations thereof.

The composition should be used as a liquid formulation for treatment, covering and encrustation of seeds. However, other formulations containing said combinations such as concentrated emulsions, suspensions, etc., may also be used.

WORKING EXAMPLES

Three formulations containing different ratios and combinations between micronutrients; molybdenum, cobalt, nickel and biostimulators; seaweed extract, S. *rebaudiana* extract, and amino acids and their incipients were prepared for treatment of soy seeds. The example below illustrates, but without limitation, the use of said composition.

EXAMPLE 1

Association of micronutrients with biostimulators in the treatment of soy seeds.

OBJECT

To evaluate formulations based on As and CoMoNi associated to biostimulators in the treatment of seeds and their effect on the productivity of soy.

MATERIAL AND METHODS

A statistical layout containing randomly arranged blocks (DBC) with six treatments and four repetitions making out 24 experimental units was used. Each experimental unit was composed by 6 planting lines 10 m long, totaling 27 $m^2$ per portion. However, for the useful area 4 central lines were used, discarding 1.5 m from each extremity, totaling 12.6 $m^2$ of useful portion. The planting was carried out on 05/18/2017 in Fazenda Boa Esperança, located in the city of Lagoa da Confusão/TO, using cultivar 8579RSF IPRO (BONUS IPRO). The phytosanitary handling, fertilization and culture tracts were carried through as usual by following the crop recommendations. The evaluated formulas are described in Table 2.

**Table 2.** Concentration of nutrients used for the composition of the three evaluated formulations.

| Nutrients | Concentration | | |
|---|---|---|---|
| | Formula 1 | Formula 2 | Formula 3 |
| Molybdenum | 0.1 - 20.0% | 0.1 - 20.0% | 0.1 - 20.0% |
| Cobalt | 0.1 - 5.0% | 0.1 - 5.0% | 0.1 - 5.0% |
| Nickel | -- | -- | 0.1 - 5.0% |
| Amino acid | 0.1 - 20.0% | -- | -- |
| Brown seeweed extract[1] | 0.1 - 20.0% | 0.1 - 20.0% | 0.1 - 20.0% |
| S. *rebaudiana* extract | -- | 0.1 - 5.0% | 0.1 - 5.0% |
| Additive | 0.1 - 10.0% | 0.1 - 10.0% | 0.1 - 10.0% |
| Excipient (q.s.p.) | 100% | 100% | 100% |

These formulations have been evaluated by equalizing the concentrations of cobalt and molybdenum at the dosages of the treatments. Thus, the evaluated treatments were:

1) absolute control, no application;
2) commercial product based on As at a dose of 0.50 ml.Kg-1 of seed;
3) CoMo at the dose of 0.66 ml.Kg-1 seed;
4) Formulation 1 (As + seaweed + amino acid) at the dose of 1.54 ml.Kg-1 of seed;
5) Formulation 2 (As + seaweed + S. *rebaudiana* extract) at the dose of 2.60 ml.Kg$^{-1}$ of seed; and
6) Formulation 3 (CoMoNi + seaweed + S. *rebaudiana* extract) at the dose of 2.30 ml.Kg$^{-1}$ of seed.

The parameters evaluated in the crop cycle were:

• Phytotoxicity: Visual evaluations conducted 14, 35 and 80 days after the plantation (DAP) and attributed scores in accordance with the score range proposed by Melhorança (1984), viz: 1) no damage; 2) small alterations (discoloration, deformation) visible in some plants; 3) small alterations (discoloration, deformation) visible in many plants; 4) strong discoloration (yellowing) or reasonable deformation without however, the occurrence of necrosis (death of the tissue); 5) necrosis (burn) of some leaves, especially at the edges, followed by deformation in leaves and sprouts; 6) more than 50% of leaves and sprouts showing necrosis (deformation); 7) more than 80% of leaves and sprouts destroyed; 8) extremely serious damages, only small green areas remaining in the plants; 9) death of the plant.

- Plant stand: The stand evaluation was carried out by counting all plantules whose cotyledons were above ground level (phenologic stage VE). This evaluation was carried out at the 14th day after planting and at the harvest.
- Height of plant and development of roots: The height of plants and the development of roots were evaluated by removing five plants consecutively from each portion. The plants were collected with the aid of a shovel or hoe, aiming at removing the highest possible amount of roots. The measurements were made by measuring the base of the plant until the last insertion in order to evaluate the height, and then measuring same from the base of the neck to the length of the last root. The evaluation was made at the 35th day after planting.
- Number of pods: At the 80th day after planting, eight plants were consecutively removed from each portion, and the number of pods per plant was counted.
- Productivity: The plants were harvested and conditioned in raffia bags so that the collected grains can be sorted and weighed then. The grain humidity values at the harvest were noted down for a posterior 13% correction, considering the equation:

$$P13\% = P_r - P_r * \frac{U_r - U_{13\%}}{100}$$

where: P13% = weight of the grains corrected to a 13% humidity; $P_r$ = real weight of the portion, without correcting the humidity; $U_r$ = real humidity of the grains at the harvest; $U_{13\%}$ = Humidity considered, that is, 13%. After the collected grains were weighed, the following equation was used:

$$Prod(sc/ha) = \frac{(P13\%/C*E*n)*10,000}{100}$$

where: Prod = Productivity in bags/ha; $P^{13\%}$ = Weight of the grains corrected to 13% humidity; C = Length of the collected line; E = Spacing between planting lines; n = Number of collected planting lines; to calculate the productivity expressed in sc.ha$^{-1}$.

- Weight of 1,000 grains (PMG): it was quantified using two samples containing 100 seeds each, with each meter for counting 50 seeds exclusively. The resulting value was expressed in grams and then turned into the weight of 1,000 grains.

The data obtained for the evaluated parameters were submitted to the variance analysis. The comparisons of the averages were made through the Scott-Knott test (p<0.05).

RESULTS AND DISCUSSION

In the first evaluation at the 14th day after planting there was a significant stand difference between treatments (p<0.05) (Table 1). Treatments 3, 4, 5 and 6 had an initial start better than the absolute control (treatment 1) and the standard used by the farm (treatment 2). Additionally, no phytotoxicity difference between treatments was detected (p>0.05).

Table 1 - Results obtained in parameters observed at the 14th day after planting, first evaluation.

| Treatments | Stand | Phytotoxicity |
|---|---|---|
| | Number of plants/m | |
| 1 Control | 13.5 b | 2.0 a |
| 2 Commercial CoMo | 15.3 b | 2.0 a |
| 3 CoMo | 16.7 a | 2.0 a |
| 4 CoMo/seaweed/amino acid | 17.6 a | 2.0 a |
| 5 CoMo/seaweed/S. rebaudiana extract | 18.9 a | 2.0 a |
| 6 CoMoNi/seaweed/S. rebaudiana extract | 18.3 a | 2.0 a |

(continued)

| Treatments | Stand | Phytotoxicity |
|---|---|---|
| | Number of plants/m | |
| VC (%) | 7.24 | 0.0 |
| **Note:** Treatments 4 the 6 represent formulations 1 to 3, respectively. Averages followed by the same letter in the column do not differ from one another for the Scott-Knott test at 5% probability. VC: Variation coefficient. | | |

The initial evaluation at the 14th day after planting also evidenced the role of nutrients cobalt (Co) and molybdenum (Me) in the physiology of the crop, influencing the number of plants emerged in the treatments that used said micronutrients. Said evaluation showed that the use of different formulations of said micronutrients can influence the availability of the same for the plant, as can be noticed in relation to treatment 2 compared to the other treatments, attaining increments between 9.15 and 23.52%.

In the evaluation at the 35th day after planting there was no significant difference for the phytotoxicity between treatments (p>0.05) (data not shown). In relation to the height and length of roots, there was a significant interaction (p<0.05) between the absolute control (treatment 1) and the other treatments. There was no significance (p>0.05) for the parameters weight of the original substance (MO) of the root and the aerial portion between treatments (Table 2).

**Table 2** - Results obtained in parameters observed at the 35th day after planting, second evaluation.

| Treatments | Height | Root | MO Root | MO Aerial |
|---|---|---|---|---|
| | (cm) | (cm) | (g) | (g) |
| C1 Control | 28.6 b | 14.3 b | 22.3 a | 144.5 a |
| 2 Commercial CoMo | 32.1 a | 16.9 a | 22.5 a | 139.5 a |
| 3 CoMo | 33.3 a | 18.9 a | 26.8 a | 165.8 a |
| 4 CoMo/seaweed/amino acid | 32.6 a | 17.7 a | 22.0 a | 126.5 a |
| 5 CoMo/seaweed/S. rebaudiana extract | 32.8 a | 18.4 a | 23.3 a | 131.8a |
| 6 CoMoNi/seaweed/S. rebaudiana extract | 33.8 a | 17.6 a | 22.3 a | 139.3 a |
| VC (%) | 2.86 | 10.99 | 16.11 | 17.31 |
| **Note:** Treatments 4 the 6 represent formulations 1 to 3, respectively. Averages followed by the same letter in the column do not differ from one another for the Scott-Knott test at a 5% probability. VC: variation coefficient. | | | | |

The increment in the height of plants shows the importance of micronutrients Co and Me for the plant biological fixation cycle, since this provides energy and nutrients from the use of Nitrogen, which are transformed and incorporated to be assimilated into the plant.

Said use of Co and Mo provided increments that ranged from 12.23 to 18.18% for the height of plants and from 18.18 to 32.16% for the length of roots (Table 2). The increase of the length of roots derives from the energy generated from the biological nitrogen fixation (FBN) and from a better use of the available water.

At the 80th day after planting, there was no significant difference for phytotoxicity between treatments (p>0.05) (date not shown) or for the parameters height, grains per pod and pods per node (Table 3). In relation to the number of pods and the number of nodes, there was a significant interaction (p<0.05) between treatments.

**Table 3** - Results obtained in parameters observed at the 80th day after planting, third evaluation.

| Treatment | Height (cm) | Number of pods | Grains/ pods | Number of nodes | Pods/node |
|---|---|---|---|---|---|
| 1 Control | 64.6 a | 35.0 a | 2.0 a | 13.8 a | 2.5 a |
| 2 Commercial CoMo | 64.1 a | 28.9 b | 2.0 a | 12.6 a | 2.3 a |
| 3 CoMo | 70.6 a | 29.1 b | 2.1 a | 13.1 a | 2.2 a |
| 4 CoMoNi/seaweed/amino acid | 68.1 a | 31.5b | 2.1 a | 13.5 a | 2.3 a |

(continued)

| Treatment | Height (cm) | Number of pods | Grains/ pods | Number of nodes | Pods/node |
|---|---|---|---|---|---|
| 5 CoMo/seaweed/S. rebaudiana extract | 65.3 a | 28.6 b | 2.0 a | 13.6 a | 2.1 a |
| 6 CoMoNi/seaweed/S. rebaudiana extract | 67.1 a | 22.3 c | 2.1 a | 10.0 b | 2.2 a |
| VC (%) | 4.25 | 10.68 | 4.1 | 10.96 | 7.82 |
| **Note:** Treatments 4 the 6 represent formulations 1 the 3, respectively. Averages followed by the same letter in the column do not differ from one another for the Scott-Knott test at a 5% probability. VC: Variation coefficient. | | | | | |

With relation to the number of pods, the highest value was observed in the absolute control (treatment 1), differing from all treatments (Table 3). This condition can be correlated with the plant stand of the treatment. By virtue of the lower number of plants in the absolute control, there was a lower competition for light and nutrients, thus making more net energy available for a lower number of plants. The other treatments did not differ from one another. However, there was an exception for treatment 6 that exhibited a lower value between same, and probably was correlated with the lower number of nodes when compared with other treatments ($p < 0.05$).

The harvest of the portions showed that there was a significant difference ($p < 0.05$) in relation to the final plant stand in the treatments. Treatment 1 (absolute control) differed from the other treatments, exhibiting a lower number of plants (Table 4). This fact can be directly correlated to the use of micronutrients Co and Me, since the treatments that used said nutrients showed a higher plant stand in the first evaluation and maintained said values along this study (Table 4).

Table 4 -Variation in plant stand at the 14th day after harvest.

| Treatments | Plant stand | | |
|---|---|---|---|
| | 14th day after planting | Harvest | Variation |
| 1 Control | 13.5 b | 11.3 b | -2.25% |
| 2 Commercial CoMo | 15.3 b | 15.3 a | 0.0% |
| 3 CoMo | 16.7 a | 18.0 a | 1.30% |
| 4 CoMo/seaweed/amino acid | 17.6 a | 17.8 a | 0.15% |
| 5 CoMo/seaweed/S. rebaudiana extract | 18.9 a | 18.5 a | -0.40% |
| 6 CoMoNi/seaweed/S. rebaudiana extract | 18.3 a | 17.5 a | -0.80% |
| VC (%) | 7.24 | 14.2 | - |
| **Note:** Treatments 4 the 6 represent formulations 1 the 3, respectively. Averages followed by the same letter in the column do not differ from one another for the Scott-Knott test at a 5% probability. VC: Variation coefficient. | | | |

In parameter productivity, there was a significance ($p < 0.05$) in different treatments, wherein treatments 3, 4 (formulation 1) and 5 (formulation 2) attained the best results. Treatment 1 (absolute control) showed the worse result observed. Treatments 2 (commercial CoMo) and 6 (formulation 3) showed intermediate values. There was no significant difference ($p > 0.05$) for the humidity of the grains among treatments (Table 4).

Table 5 - Results obtained in parameters observed in the harvest of treatments, last evaluation.

| Treatments | Average humidity | Weight of 1,000 grains | Productivity |
|---|---|---|---|
| | (%) | (g) | Sc/ha |
| 1 Control | 10.1 a | 71.6 a | 40.8 c |
| 2 Commercial CoMo | 10.9 a | 61.0 a | 51.1 b |
| 3 CoMo | 10.5 a | 71.7 a | 57.8 a |
| 4 CoMo/seaweed/amino acid | 10.7 a | 68.5 a | 62.0 a |

(continued)

| Treatments | Average humidity | Weight of 1,000 grains | Productivity |
|---|---|---|---|
| | (%) | (g) | Sc/ha |
| 5 CoMo/seaweed/S. rebaudiana extract | 10.8 a | 64.9 a | 59.8 a |
| 6 CoMoNi/seaweed/S. rebaudiana extract | 11.0 a | 62.7 a | 51.1 b |
| VC (%) | 7.66 | 22.82 | 4.89 |

**Note:** Treatments 4 the 6 represent formulations 1 the 3, respectively. Averages followed by the same letter in the column do not differ from one another for the Scott-Knott test at a 5% probability. VC: Variation coefficient.

Compared to treatment 1, treatments 3 the 5 showed a productivity gain that ranged from 10.3 to 21.2 sc/ha, that is, an increase from 25.24 to 51.96%. Further, compared to treatment 2 (commercial CoMo), treatments 3 the 5 showed a higher productivity ranging from 6.7 to 10.9 sc/ha, that is, an increase from 13.11 to 21.33%.

CONCLUSIONS

The formulations evaluated herein evidence the fact that the use of micronutrients Co, Me and Ni associated to biostimulators provide significant increments in the productivity of soy plants and, consequently, a higher profitability to the farmer. Its use is a viable alternative to increase the productivity indices as well as improve the vigor and emergence in soy crops.

FUNCTIONING OF THE INVENTION

The preparation of the formulation should follow the following flow of events:

- Severe aseptic and clean conditions should be implanted to assure a contamination free product;
- Raw materials: the raw materials that will make up the product should be received and manipulated by trained people;
- Mixture: the raw materials should be weighed and mixed according to the standard operational procedure (SOP) at the ratios prescribed;
- Sampling: after the mixture, samples for verification and certification of the guarantee of the product should be taken. The guarantees proposed for each product (%) should be analyzed;
- Packing: the formulated product that exhibits the guarantee specifications should be packed in previously labeled 1.0; 5.0; 20.0 or 1,000 liter drums;
- Storage: the drums should be arranged on wood pallets and stored in a dry, aired and light-protected place, and remain under such condition until it is dispatched.

The present invention may be applied or not by means of treatment, covering or industrial encrustation of seeds, using planting bars, plantation furrows or *"on farm"* treatment. The application method should be analyzed case by case and will depend on the technical conditions and the needs of every producer.

ADVANTAGES ATTAINED

It was demonstrated here that the present invention:

- Is a viable alternative for the implementation of biostimulators in cultivated plants;
- Provides the crops with an increased vigor;
- Provides a better plant stand in the emergence, and consequently maintains a high plant stand in the crop cycle;
- Provides a better root formation, and consequently protection against abiotic stress;
- Increases the productivity indices of the crops.

The scope of the present patent should not be limited to the working examples, but to the terms defined in the claims and its equivalents.

BIBLIOGRAPHICAL REFERENCES

ARAÚJO, G.A.A.; SILVA, A.A.; THOMAS, A.; ROCHA, P.R.R. Misturas de herbicidas com adubo molíbdico na cultura do Feijão. Planta Daninha, Viçosa, v.26, n.1, p.237-247, 2008.

ARAGÃO, C.A.; DANTAS, B.F.; ALVES, E.; CATANEO, A.C.; CA V ARIANI, C.; NAKAGA W A, J. Atividade amilolítica e qualidade fisiológica de sementes armazenadas de milho super doce tratadas com ácido giberélico. Revista Brasileira de Sementes, Pelotas, vol. 25, n°1, p.43-48,2003.

BRANDÃO, R.P. Importância dos aminoácidos na agricultura sustentável. Informativo Bio Soja, São Joaquim da Barra, inf.5, p.6-8, 2007.

BROWN, M. A. The use of marine derived products and soybean meal inorganic vegetable production. 94 p. Thesis (Master in Science) - Department of Horticultural Science, North Carolina State University, Raleigh, 2004.

CERETTA, C.A; PAVINATO, A.; PAVINATO, P.S.; MOREIRA, LC.L.; GIROTTO, E.; TRENTIN, E. E . Micronutrientes na soja: produtividade e análise econômica. Ciência Rural, Santa Maria, v.35, n.3, p.576-581, mai-jun, 2005.

CAÇO, J. Aminoácidos-nutrientes orgânicos. 2008. Disponível em: http://www.hubel.pt/hubel/Upload/Images/ Artigos/HV Aminoácidos CASTRO, P. R. C.; VIEIRA, E. L. Aplicações de reguladores vegetais na agricultura tropical. Guaíba: Agropecuária, 2001. 132p.

EMBRAPA SOJA. Recomendações técnicas para a cultura da soja no Paraná 1996/97. Londrina: Embrapa Soja, 1996. 187p. (Documentos, 97) EMBRAPA SOJA. Tecnologias de produção de soja: Paraná 2005. Londrina: Embrapa Soja, 2004. 224p.

FAVARIN, J .L.; MARINI, J P. A importância dos micronutrientes para a produção de grãos. A Lavoura, Rio de Janeiro, p. 29 - 31,05 jun. 2000. Disponível em: http://www.drashirleydecampos.com.br/noticias/4 462.

HOFS, A.; SCHUCH, L.O.B.; PESKE, S.T. BARROS, A.C.S.A. Emergência e crescimento de plântulas de arroz em resposta a qualidade fisiológica de sementes. Revista Brasileira de Sementes, Pelotas, v.26 n.1, p.92-97, 2004.

HUNGRIA, M.; CAMPO, R.J.; MENDES, LC. A importância do processo de fixação biológica do nitrogênio para a cultura da soja: componente essencial para a competividade do produto brasileiro. Londrina: Embrapa Soja: Embrapa Cerrados, 2007. 80 p. (Documentos/Embrapa Soja. Documentos, 283).

LUDWIG, M. P.; LUCCA FILHO, O. A.; BAUDET, L. M.; DUTRA, L. M. C.; A VELAR, S. A. G.; OLIVEIRA, S.; CRIZEL, R. L.; RIGO, G. Armazenamento de sementes de soja recobertas com aminoácido, fungicida, inseticida e polímero e a incidência de fungos de armazenamento. In: XVII Congresso de iniciação científica e X Encontro de pós-graduação. Pelotas. RS. 2008. Anais ... Pelotas, 2008.

MARCONDES, J.A.P; CAIRES, E.F. Aplicação de molibdênio e cobalto na semente para cultivo da soja. Bragantia, Campinas, v.64, n.4, p.687- 694,2005.

MELHORANÇA, A.L. Efeito dos herbicidas pós-emergentes no desenvolvimento e na produção de grãos de soja. Londrina: Embrapa-CNPSo, 1984. 1078p. (Embrapa-CNPSo. Documentos, 7).

ONO, E.O.; RODRIGUES, J.D.; SANTOS, S.O. Efeito de fitorreguladores sobre o desenvolvimento de feijoeiro (Phaseolusvulgaris L.) cv Carioca. Revista Biociências, Taubaté, v. 5, n.1, p.7-13, 1999.

SILVA, T. T. de A.; PINHO, V. de R. V.; CARDOSO, D. L.; FERREIRA, C. A.; ALVIM, P. de O.; COSTA, A. A. F. da. Qualidade Fisiológica de Sementes de Milho na Presença de Bioestimulantes. Ciência e Agrotecnologia, Lavras, v. 32, n. 3, p. 840-846, maio/jun., 2008.

TAIZ, L.; ZIEGER, E. Auxina: o hormônio de crescimento. In: Fisiologia vegetal. 3.ed. Porto Alegre: Artmed, 2004. Capo 19, p. 449-484.

VITTI, G.C.; FORNASIERI FILHO D.; PEDROSO, P.A.C.; CASTRO, R.S.A. Fertilizante com molibdênio e cobalto na cultura da soja. Revista Brasileira de Ciência do Solo, Campinas, v.8, p.349-352, 1984.

VIEIRA, E. L. Ação de bioestimulante na germinação de sementes, vigor das plântulas, crescimento radicular e produtividade de soja, feijoeiro e arroz. 122 p. Tese (Doutorado em Fitotecnia) - Escola Superior de Agricultura "Luiz de Queiroz", Universidade de São Paulo, Piracicaba, 2001.

WEBER, F. Uso de bioestimulantes no tratamento de sementes de soja. Pelotas,2011.-27f. - Dissertação (Mestrado) - Programa de Pós-Graduação em Ciência e Tecnologia de Sementes. Faculdade de Agronomia Eliseu Maciel. Universidade Federal de Pelotas. Pelotas, 2011.

**Claims**

1. **COMPOSITION OF MICRONUTRIENTS AND ORGANIC COMPOUNDS FOR TREATING, COATING AND ENCRUSTING SEEDS, characterized by** comprising the following nutrients in percentage, g.Kg$^{-1}$:

| | |
|---|---|
| Molybdenum | 0.1 - 20.0% |
| Cobalt | 0.1 - 5.0% |
| Amino acid | 0.1 - 20.0% |
| Brown seaweed extract | 0.1 - 20.0% |
| Additive | 0.1 - 10.0% |
| Excipient (q.s.q) | 100% |

2. **COMPOSITION OF MICRONUTRIENTS AND ORGANIC COMPOUNDS FOR TREATING, COATING AND ENCRUSTING SEEDS, characterized by** comprising the following nutrients, as a percentage g.Kg$^{-1}$:

| | |
|---|---|
| Molybdenum | 0.1 - 20.0% |
| Cobalt | 0.1 - 5.0% |
| Brown seaweed extract | 0.1 - 20.0% |
| Stevia rebaudiana extract | 0.1 - 5.0% |
| Additive | 0.1 - 10.0% |
| Excipient (q.s.q) | 100% |

3. **COMPOSITION OF MICRONUTRIENTS AND ORGANIC COMPOUNDS FOR TREATING, COATING AND ENCRUSTING SEEDS, characterized by** comprising the following nutrients, as a percentage, g.Kg$^{-1}$:

| | |
|---|---|
| Molybdenum | 0,1 - 20.0% |
| Cobalt | 0,1-5.0% |
| Nickel | 0.1 - 5.0% |
| Brown seaweed extract | 0.1 - 20.0% |
| Stevia rebaudiana extract | 0.1 - 5.0% |
| Additive | 0.1 - 10.0% |
| Excipient (q.s.q) | 100% |

4. **COMPOSITION OF MICRONUTRIENTS AND ORGANIC COMPOUNDS FOR TREATING, COATING AND ENCRUSTING SEEDS,** according to claims 1, 2 and 3, **characterized in that** the brown seaweed extract is selected from the group consisting of *Ascophyllum nodosum, Macrocystis pyrifera, Ecklonia maxima, Durvilalea antarctica, Durvillaea potatorum,* and combinations thereof.

5. **COMPOSITION OF MICRONUTRIENTS AND ORGANIC COMPOUNDS FOR TREATING, COATING AND ENCRUSTING SEEDS,** according to claims 1, 2 and 3, **characterized in that** the additives are dispersants selected from the group consisting of water-soluble ionic polymers, water-soluble anionic polymers, surfactants selected from the group consisting anionic surfactants and non-ionic surfactants, and combinations thereof.

6. **COMPOSITION OF MICRONUTRIENTS AND ORGANIC COMPOUNDS FOR TREATING, COATING AND ENCRUSTING SEEDS,** according to claims 1, 2 and 3, **characterized in that** the excipients are selected from the group consisting of silicas, talc, bentonite, carbohydrates, carbonates, starches, sugars, saccharides, and combinations thereof.

7. **COMPOSITION OF MICRONUTRIENTS AND ORGANIC COMPOUNDS FOR TREATING, COATING AND ENCRUSTING SEEDS,** according to claim 1, **characterized in that** it is used in a wettable powder formulation, emulsions, suspensions, concentrated suspensions, and granules.

8. **COMPOSITION OF MICRONUTRIENTS AND ORGANIC COMPOUNDS FOR TREATING, COATING AND ENCRUSTING SEEDS,** according to claims 1, 2 and 3, **characterized in that** it is used in the treatment, covering and encrustation of the seeds of cultivated plants, such as: *Brachiaria spp. (Brachiaria brizantha, Brachiaria decumbens, Brachiaria humidicola, Brachiaria mutica, Brachiaria ruziziensis, Brachiaria arrecta, Brachiaria dictyneura), Panicum*

*spp. (Panicum maximum), Sorghum spp., Pennisetum americanum, Glycine max, Zea mays, Gossypium hirsutum,* greenery *(Solanum lycopersicum, Allium cepa, Lactuca sativa, Daucus carota, Capsicum annuum),* forestry *(Eucalyptus spp., Tectona grandis, Hevea brasiliensis, Pinus sp.), Nicotiana tabacum,* ornamental *Crotalaria spp. (Crotalaria juncea, Crotalaria spectabilis, Crotalaria ochroleuca, Crotalaria paulina, Crotalaria breviflora)*

## INTERNATIONAL SEARCH REPORT

| | International application No. |
|---|---|
| | **PCT/BR2018/050425** |

| A. CLASSIFICATION OF SUBJECT MATTER |
|---|
| **A01N65/00 (2009.01), A01N65/03 (2009.01), A01N65/12 (2009.01), C05D9/00 (2006.01)** |
| According to International Patent Classification (IPC) or to both national classification and IPC |

| B. FIELDS SEARCHED |
|---|
| Minimum documentation searched (classification system followed by classification symbols) |
| **A01N** |
| Documentation searched other than minimum documentation to the extent that such documents are included in the fields searched |
| **A01N 65/00** |
| Electronic data base consulted during the international search (name of data base and, where practicable, search terms used) |
| **CAPES, ESPACENET** |

C. DOCUMENTS CONSIDERED TO BE RELEVANT

| Category* | Citation of document, with indication, where appropriate, of the relevant passages | Relevant to claim No. |
|---|---|---|
| Y<br>A | CN 101215206 A (SHANXI INST OF GEOL S URVEY[CN])<br>09 July 2008 (2008-07-09)<br>See abstract | 1;4-8<br>2,3 |
| Y<br>A | RU 2008127876 A (LOSEV VLADIMIR ALEKSANDROVICH [RU])<br>20 January 2010 (2010-01-20)<br>See abstract | 1;4-8<br>2,3 |
| Y<br>A | Dourado-Neto, D.; Dario, J.A.; Martin, T.N.; Silva, M.R.; Pavinato, P.S.; Habitzreiter, T.L.; Mineral fertilizer with cobalt and molybdenum in soybean; *Semina: Ciências Agrárias*, Londrina, v. 33, supplement 1, p. 2741-2752, 2012<br>See abstract | 1;4-8<br>2,3 |

| [x] Further documents are listed in the continuation of Box C. | [x] See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 December 2018 | 10 January 2019 |

| Name and mailing address of the ISA/ **BR**<br>INSTITUTO NACIONAL DA PROPRIEDADE INDUSTRIAL<br>Rua Mayrink Veiga n° 9, 6° andar<br>Facsimile No. cep: 20090-910, Centro - Rio de Janeiro/RJ | Authorized officer<br><br>**Renata de Melo Aguiar**<br>Telephone No. +55 21 3037-3493/3742 |
|---|---|

Form PCT/ISA/210 (second sheet) (January 2015)

## INTERNATIONAL SEARCH REPORT

International application No.

PCT/BR2018/050425

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | Carvalho, M.E.A.; Castro, P.R.C.; Novembre, A.D.C.; Chamma, H.M.C.P.; Seaweed extract improves the vigor and provides the rapid emergence of dry bean seeds, *American-Eurasian J. Agric. & Environ. Sci.*, 13 (8): 1104-1107, 2013<br>See abstract<br><br>------------------------------------------- | 1;4-8<br>2,3 |
| Y<br>A | Kocira, A; Swieca, M.; Kocira, S.; Zlotek, U.; Jakubczyk, A.; Enhancement of yield, nutritional and nutraceutical properties of two common bean cultivars following the application of seaweed extract *(Ecklonia maxima)*, *Saudi Journal of Biological Sciences* (2018) 25, 563–571<br>See abstract<br><br>------------------------------------------- | 1;4-8<br>2,3 |
| Y<br>A | Arioli, T.; Mattner, S.W.; Winberg, P.C.; Applications of seaweed extracts in Australian agriculture: past, present and future; *J Appl Phycol* (2015) 27:2007–2015<br>See the whole document | 1;4-8<br>2,3 |

Form PCT/ISA/210 (continuation of second sheet) (January 2015)

INTERNATIONAL SEARCH REPORT
Information on patent family members

International application No.

**PCT/BR2018/050425**

| CN 101215206 A | 2008-07-09 | CN 101215206 B | 2010-10-13 |
| RU 2008127876 A | 2010-01-20 | RU 2407287 C2 | 2010-12-27 |

Form PCT/ISA/210 (patent family annex) (January 2015)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *CASTRO,* 2001
- *VIEIRA,* 2001
- **ARAÚJO, G.A.A. ; SILVA, A.A. ; THOMAS, A. ; ROCHA, P.R.R.** Misturas de herbicidas com adubo molibdico na cultura do Feijão. *Planta Daninha, Viçosa,* 2008, vol. 26 (1), 237-247
- **ARAGÃO, C.A. ; DANTAS, B.F. ; ALVES, E. ; CATANEO, A.C. ; CA V ARIANI, C. ; NAKAGA W A, J.** Atividade amilolítica e qualidade fisiológica de sementes armazenadas de milho super doce tratadas com ácido giberélico. *Revista Brasileira de Sementes, Pelotas,* 2003, vol. 25 (1), 43-48
- **BRANDÃO, R.P.** Importância dos aminoácidos na agricultura sustentável. *Informativo Bio Soja,* 2007, 6-8
- The use of marine derived products and soybean meal inorganic vegetable production. **BROWN, M. A.** Thesis (Master in Science). Department of Horticultural Science, North Carolina State University, 2004, 94
- **CERETTA, C.A ; PAVINATO, A. ; PAVINATO, P.S. ; MOREIRA, LC.L. ; GIROTTO, E. ; TRENTIN, E. E.** Micronutrientes na soja: produtividade e análise econômica. *Ciência Rural,* May 2005, vol. 35 (3), 576-581
- **CAÇO, J.** *Aminoácidos-nutrientes orgânicos,* 2008, http://www.hubel.pt/hubel/Upload/Images/ Artigos/HV Aminoácidos CASTRO
- **P. R. C. ; VIEIRA, E. L.** Aplicações de reguladores vegetais na agricultura tropical. *Guaíba: Agropecuária,* 2001, 132
- EMBRAPA SOJA. Recomendações técnicas para a cultura da soja no Paraná 1996/97. *Londrina: Embrapa Soja,* 1996, 187
- EMBRAPA SOJA. *Tecnologias de produção de soja: Paraná 2005,* 2004, 224
- **FAVARIN, J .L. ; MARINI, J P.** A importância dos micronutrientes para a produção de grãos. *A Lavoura,* 05 June 2000, 29-31, http://www.drashirleydecampos.com.br/noticias/4 462
- **HOFS, A. ; SCHUCH, L.O.B. ; PESKE, S.T. BARROS.** A.C.S.A. Emergência e crescimento de plântulas de arroz em resposta a qualidade fisiológica de sementes. *Revista Brasileira de Sementes,* 2004, vol. 26 (1), 92-97
- **HUNGRIA, M. ; CAMPO, R.J. ; MENDES, LC.** A importância do processo de fixação biológica do nitrogênio para a cultura da soja: componente essencial para a competividade do produto brasileiro. *Londrina: Embrapa Soja: Embrapa Cerrados,* 2007, 80
- **LUDWIG, M. P. ; LUCCA FILHO, O. A ; BAUDET, L. M. ; DUTRA, L. M. C. ; A VELAR, S. A. G. ; OLIVEIRA, S. ; CRIZEL, R. L. ; RIGO, G.** Armazenamento de sementes de soja recobertas com aminoácido, fungicida, inseticida e polímero e a incidência de fungos de armazenamento. *In: XVII Congresso de iniciação científica e X Encontro de pós-graduação,* 2008
- **MARCONDES, J.A.P ; CAIRES, E.F.** Aplicação de molibdênio e cobalto na semente para cultivo da soja. *Bragantia,* 2005, vol. 64 (4), 687-694
- **MELHORANÇA, A.L.** Efeito dos herbicidas pós-emergentes no desenvolvimento e na produção de grãos de soja. *Londrina: Embrapa-CNPSo,* 1984, 1078
- **ONO, E.O. ; RODRIGUES, J.D. ; SANTOS, S.O.** Efeito de fitorreguladores sobre o desenvolvimento de feijoeiro (Phaseolusvulgaris L.) cv Carioca. *Revista Biociências,* 1999, vol. 5 (1), 7-13
- **SILVA, T. T. DE A. ; PINHO, V. DE R. V. ; CARDOSO, D. L. ; FERREIRA, C. A. ; ALVIM, P. DE O. ; COSTA, A. A. F. DA.** Qualidade Fisiológica de Sementes de Milho na Presença de Bioestimulantes. *Ciência e Agrotecnologia,* May 2008, vol. 32 (3), 840-846
- Auxina: o hormônio de crescimento. **TAIZ, L. ; ZIEGER, E.** Fisiologia vegetal. 2004, 449-484
- **VITTI, G.C. ; FORNASIERI FILHO D. ; PEDROSO, P.A.C. ; CASTRO, R.S.A.** Fertilizante com molibdênio e cobalto na cultura da soja. *Revista Brasileira de Ciência do Solo,* 1984, vol. 8, 349-352
- Ação de bioestimulante na germinação de sementes, vigor das plântulas, crescimento radicular e produtividade de soja, feijoeiro e arroz. **VIEIRA, E. L.** Tese (Doutorado em Fitotecnia). Escola Superior de Agricultura "Luiz de Queiroz", Universidade de São Paulo, 2001, 122
- Uso de bioestimulantes no tratamento de sementes de soja. **WEBER, F.** Dissertação (Mestrado) - Programa de Pós-Graduação em Ciência e Tecnologia de Sementes. Faculdade de Agronomia Eliseu Maciel. Universidade Federal de Pelotas, 2011, 27f